# EUROPEAN PATENT APPLICATION

(11) **EP 3 427 980 A1**
(43) Date of publication of application: **16.01.2019**
(21) Application number: 18182016.8
(22) Date of filing: 05.07.2018
(51) Int. Cl.: B60G 7/02

(54) **EXTRUDED SPRING BRACKET**

(30) Priority: 13.07.2017 TR 201710332
(71) Applicant: Tirsan Treyler Sanayi Ve Ticaret Anonim Sirketi, 54580 Sakarya (TR); Asas Alüminyum Sanayi ve Ticaret Anonim Sirketi, Istanbul (TR)
(72) Inventor: KUMAS , ALI, Sakarya (TR); ZORLU, FATIH ZAFER, Istanbul (TR); AYAN, SADIK MUTLU, Istanbul (TR)
(74) Representative: Yamankaradeniz, Kemal

(57) **Abstract**

The spring brackets (20) are used to fasten the axles (12) to the vehicle chassis (11) in trailer vehicles (10) like tankers; are produced in a one-piece structure without the need for welding or fastening elements, so as to avoid tension and dimensional changes due to the welding process, while at the same time eliminating labor cost and time lost in conventional methods; and are characterized as being produced together with all the constituting components like side rings (22), side blocks (21), and cross-sections (23) one at a time and in one-piece by the extrusion method.

## Description

### Technical Field

The invention is related to, the spring brackets used to fasten the axles to the vehicle chassisin trailer vehicles which carry chemical and granulated loads.

In particular, the invention is related to extruded spring brackets which are produced in a one-piece structure without the need for welding or fastening elements by means of an extrusion method, so as to avoid tension and dimensional changes due to the welding process, while at the same time eliminating labor and time loss in conventional methods.

### The Current Status of the Technique

Spring brackets are used to mount the axles of class "O" trailers with air suspensionto the chassis in tankers used for transportation of fuel-oil, chemical and granular products. The spring brackets have different designs but are usually manufactured upon additional processes like cutting different components, welding them to each other, drilling and milling. Aluminum and steel applications are used as raw materials.

If the connections used in the spring brackets are welded, the risk of tension in the welded areas increase. Tension increases the risk of becoming inoperative by reducing the overall endurance of the structure. This can lead to major problems where the number of welded areas increase. Due to the stretching after welding, possible shrinkage in the measures of brims may occur. In addition to this, the possibility of cracking also increases because the metal structure is changed in the welding zones.

There is a sample spring bracket in the useful document "An assembly of aluminum spring bracket and cross-section C" dated 2013/13422 which was encountered while searching the literature for current techniques. In this arrangement, the cross-section C of the aluminum material constituting the spring bracket is connected to the side ring by means of bolts. In this way the need for welding process is reduced.

The use of welding or fasteners for joining spring bracket pieces leads to long production periods due to the fact that many different parts are assembled together. When additional labor cost is added, it becomes a very expensive production. It also causes the axles used for spring brackets to be difficult to assemble.

As a result, there is a need to make improvements in the technical field to satisfy the need for extruded spring brackets, which are produced in one-piece with the help of the extrusion method and without the need for extra welding or fasteners, hence avoiding tension and dimensional changes due to the welding process and eliminating the labor costs and waste of time in conventional methods.

### Purpose Of The Invention

The current invention is related to a spring bracket that meets the above-mentioned requirements, removes all disadvantages hence adds some additional advantages.

The main purpose of the invented spring bracket, is to avoid performing any welding process or the use of fasteners by producing side blocks, flanges and cross-section pieces forming the general structure at a time. In this way, it is aimed to reduce the number of welded areas and thus the tension encountered after the welding process and to eliminate the risk of cracking. Moreover, since it is pressed as box profile by the extrusion method more precisely, the risk of closing the gages of brims of spring brackets is eliminated. Accordingly, mounting of axles is easier compared to that of the existing products. In addition, production time is shortened considerably as additional processes such as cutting, drilling, bending and welding will be eliminated. Therefore, the competitive advantage is increased by introducing a lower cost structure compared to existing ones.

Another purpose of the invention is to provide additional reinforcement putting through side blocks, side rings and cross-sections in order to increase the general endurance. In this way, distance opening and closing in between the side blocks is prevented and their lifetime is increased. Intermediary reinforcements are also produced with the extrusion method together with other main components and do not require additional production time.

Another purpose of the invention is to increase the general endurance owing to the tie pieces formed on the side blocks. Thus, the side blocks are prevented from bending and their lifetime is increased. Tie pieces are also produced with the extrusion method together with other components and do not require additional production time.

In order to achieve the above-mentioned aims in the most general way, spring brackets which are produced in one-piece without the need for welding or fasteners, are developed to be used in mounting axles to the trailer vehicle chassis so as to eliminate labor costs and time lost in conventional ways while avoiding tension and dimensional changes due to welding process. The side rings, side blocks and cross-sections, which constitute the developed spring bracket, is manufactured by extrusion method in one at a time and in one-piece.

The structural and characteristic features of the invention and all advantages thereof will be more clearly understood by means of the following figures and detailed description which are given referring to these figures. Therefore, evaluation should be done taking these figures and detailed explanation into consideration.

### Figures to Help in Understanding the Invention

In order to best understand the structuring of the current invention and its advantages together with the additional elements, it should be appreciated that the figures described below are to be understood.
Figure - 1: The side view of the vehicle on which the invented spring bracket is attached.
Figure - 2: The general appearance of the invented spring bracket.
Figure - 3: A close-up view of the invented spring bracket on the chassis.
Figure - 4: A close-up view of the invented spring bracket on the axle.

**Component References**

| | | | |
|---|---|---|---|
| 10 | Vehicle | 231 | Discharging |
| 11 | Chassis | 24 | intermediary reinforcement |
| 12 | Axle | 25 | Damper mounting slot |
| 13 | Fulcrum | 251 | Damper mounting shaft |
| 14 | Axle Joint | 26 | Axle mounting slot |
| 15 | Damper | 261 | Bearing |
| 20 | Spring bracket | 27 | Tie piece |
| 21 | Side Block | 28 | Welding groove |
| 22 | Side ring | x | Clutch Centerline |
| 221 | Mounting slot | y | Extrusion Centerline |
| 23 | Cross-section | | |

### Detailed Description Of The Invention

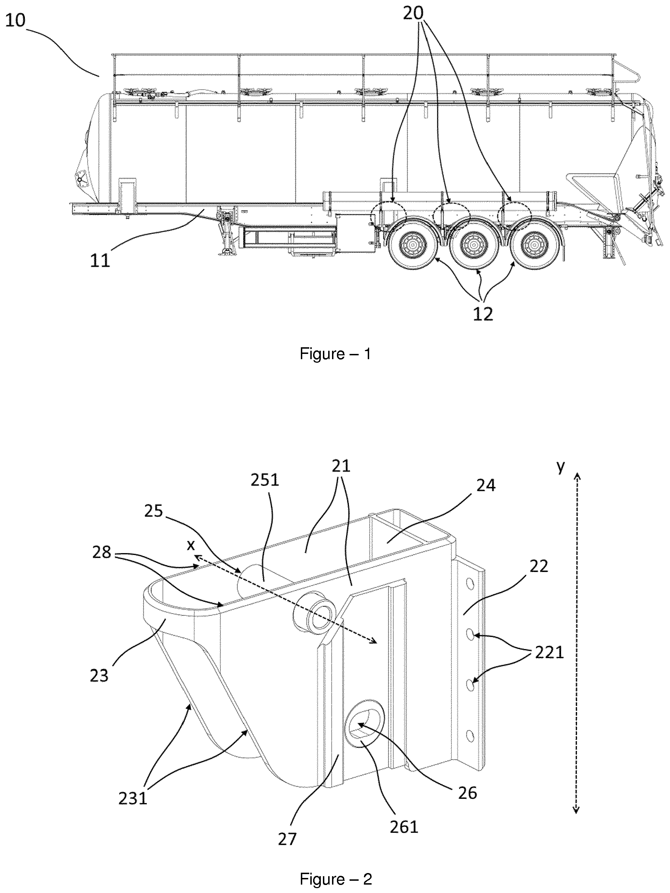

The invention particularly is related to spring brackets (20) used for mounting axles (12) of class "O" trailers with air suspension to the chassis (11); and it aims to eliminate the effects of the welding operations on the spring brackets (20) and the problems that are encountered while mounting the spring bracket (20) to the chassis (11). The spring brackets (20) used for mounting of axles (12) to the chassis (11) in heavy load vehicles (10) such as a tanker which is demonstrated in Figure 1, can be manufactured without fastening or welding elements when produced by the extrusion method and thus avoid tension and dimensional changes due to the welding process while resetting the labor cost and time lost in the conventional methods. The main components of the extruded spring brackets (20) are manufactured one-at-a-time and in one-piece by extrusion method along the extrusion centerline (y). These are side rings (22) which are interfaced with the chassis (11), side blocks (21) which are connected to the side rings (22) and which are interfaced with the axles (12) and the cross-section (23) that connect side blocks (21). The side ring (22), in addition to the chassis (11), is also interfaced with the crossover of fuel oil and chemical vehicles.

Figure 2 illustrates an overview of the invented spring bracket (20). On the side ring (22), which is interfaced with the chassis (11), there are mounting slots (221) in the form of holes that allow connection with the chassis (11). The mounting slots (221) are opened on the side rings (22) by milling after the extrusion process. Similarly, one of the different processes other than the extrusion process is formed by discharging (231) on the cross-section (23) along with the extrusion centerline (y). Discharging process (231) creates an extra zone and allows the operation of the moving parts like axle joint (14).

Intermediary reinforcements (24) are positioned to increase the endurance in between the side blocks (21). Intermediary reinforcements (24) are also produced with the extrusion method together with other main components. In the same way, the tie pieces (27) which are formed by the extrusion method on the side blocks (21) along with the extrusion centerline (y) are also used to increase the endurance. A few of the operations carried out other than the extrusion are the damper mounting slots (25) formed on the side blocks (21) in the direction of the clutch centerline (x) perpendicular to the extrusion centerline (y). The damper mounting slots (25) intervene the moving connection by bedding the damper mounting shaft (251). Likewise the axle mounting slots (26) formed on the side blocks (21) along with the clutch centerline (x) perpendicular to the extrusion centerline (y) also act as bedding to the axle joint (14). The bearing (261), which has a resistance to abrasion, is positioned differently on the axle mounting slot (26).

In the preferred structure, the welding groove (28) is opened at the upper edges of the side ring (22), the side block (21) and the cross-section (23) on the spring bracket (20) made up of aluminum material by extrusion method. The welding groove (28) is a standard requirement for welding process and is used in welding the spring bracket (20) to the chassis (11).

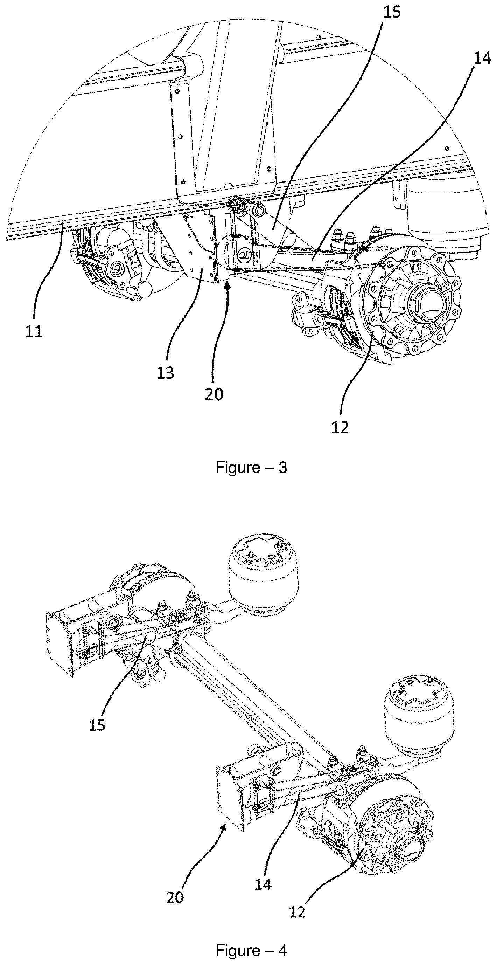

In the production process of the spring bracket (20), first it is pressed in the form of a long block and cut in appropriate length; then the upper part of the side ring (22) of the short piece is discharged so that it can be welded with the chassis (11). The mounting slots (221) are drilled in order to enable the bolted connection of the side rings (22) to the extra support (13) in between the spring bracket (20) and the chassis (11) shown in Figure 3. The intermediary reinforcement (24), which prevents the opening and closing of the spring bracket (20) is pressed in single piece in extrusion together with the side blocks (21) without requiring any welding process. A welding groove (28) is opened along the upper edge of the spring bracket (20).

In order to give endurance to the spring bracket (20), extra thick tie pieces (27) are pressed together with side blocks (21) by extrusion on both sides of the side blocks (21). Damper mounting slots (251) are opened for welding on the side blocks (21) on both sides so that the damper mounting shaft (25) can be properly welded. The cross-section (23) located at the upper front part of the spring bracket (20) is designed in an oval form in order to weld the chassis (11) easily and strong. As the axle joint moves (14), as shown in Figure 4, the lower part is removed for discharging in order to prevent the collision with the cross-section (23). The axle mounting slots (26) are opened so that the axle (12) can be connected to the side blocks (21) on both sides. Steel bearings (261) are preferably hammered to the inner side to prevent abrasion of the axle mounting slots (26).

## Claims

1. Spring bracket (20) used in mounting the axles (12) to the chassis (11) in the trailer vehicles (10); which is manufactured one at a time and in one-piece by extrusion method along with the extrusion centerline (y) without the need for welding or fastening components with;
- at least one side ring (22) interfacing with the mentioned chassis (11),
- at least two side blocks (21) in connection with the mentioned side ring (22) and interfacing with the axle (12),
- and including at least one cross-section (23) connecting the mentioned side blocks (21).

2. A spring bracket (20) satisfying Demand 1 characterized as; including at least one mounting slot (221) formed on the mentioned side ring (22) and providing an interface with the chassis (11).

3. A spring bracket (20) satisfying Demand 1 characterized as;including at least one discharge (231)formed on the mentioned cross (23) along with the extrusion centerline (y) and permitting a moving part such as the axle joint (14).

4. A spring bracket (20) satisfying Demand 1 characterized as;including an intermediary reinforcement (24) formed in the direction of the extrusion centerline (y) in between the mentioned side blocks (21), preferably by means of an extrusion method.

5. A spring bracket (20) satisfying Demand 1 characterized as;including at least one damper mounting shaft (25) formed in the direction of the clutch centerline (x) perpendicular to the extrusion centerline (y) on the mentioned side blocks (21) and bedding the damper mounting shaft (251).

6. A spring bracket (20) satisfying Demand 1 characterized as;including at least one axle mounting slot (26) formed in the direction of the clutch centerline (x) perpendicular to the extrusion centerline (y) on the mentioned side blocks (21) and bedding the axlejoint (14).

7. A spring bracket (20) satisfying Demand 6 characterized as;including at least one bearing (261) positioned in the mentioned axle mounting slot (26) and exhibiting abrasion resistance.

8. A spring bracket (20) satisfying Demand 1 characterized as;including at least one tie piece (27) formed by extrusion in the direction of the extrusion centerline (y) on the mentioned side blocks (21) and givingendurance.

9. A spring bracket (20) satisfying Demand 1 characterized as; including welding grooves (28) opened at the edges of mentioned side ring (22) and / or side block (21) and / or cross-section (23).

10. A spring bracket (20) satisfying Demand 1 characterized as; being produced from aluminum material by extrusion method.

11. A spring bracket (20) satisfying Demand 1 characterized as; including a mentioned cross-section (23) in curved form.
